# EUROPEAN PATENT APPLICATION

(11) **EP 3 689 958 A1**
(43) Date of publication of application: **05.08.2020**
(21) Application number: 18862554.5
(22) Date of filing: 16.02.2018
(51) Int. Cl.: C08L 1/10, B29C 45/00, C08J 5/18, C08K 5/10, C08L 33/04, C08L 67/04, C08L 101/00

(54) **RESIN COMPOSITION AND MOLDED RESIN OBJECT**

(30) Priority: 26.09.2017 JP 2017184700
(71) Applicant: Eastman Chemical Company, Kingsport, TN 37660 (US)
(72) Inventor: MIYAZAKI Kana, Minamiashigara-shi Kanagawa 250-0111 (JP); TANAKA Ryo, Minamiashigara-shi Kanagawa 250-0111 (JP); MORIYAMA Masahiro, Minamiashigara-shi Kanagawa 250-0111 (JP); YAO Kenji, Minamiashigara-shi Kanagawa 250-0111 (JP)
(74) Representative: Haseltine Lake Kempner LLP
(86) International application number: PCT/JP2018/005572
(87) International publication number: WO 2019/064626

(57) **Abstract**

To provide a resin composition which is capable of obtaining a resin molded article excellent in the impact resistance while suppressing the decrease in transparency. The resin composition contains a cellulose ester compound (A), a poly(meth)acrylate compound (B), a polyester resin (C) and an ester compound (D) having a molecular weight of 250 or more and 2,000 or less.

## Description

### TECHNICAL FIELD

The present invention relates to a resin composition and a resin molded article.

### BACKGROUND ART

Hitherto, various resin compositions have been provided and are used for various applications. Resin compositions are used particularly in various components and housings of home appliances and automobiles and the like. Further, thermoplastic resins are also used in components, for example, housings of business apparatuses and electric and electronic apparatuses.

In recent years, plant-derived resins have been used, and there is a cellulose ester compound as one of the plant-derived resins which have been conventionally known.

For example, in Patent Document 1, a resin composition comprising blending (A) a polylactic acid resin, (B) a methacrylic resin, and (C) a thermoplastic resin having a refractive index in a range of 1.45 to 1.50, wherein a weight ratio of the polylactic acid resin (A) to the methacrylic resin (B) is 70/30 to 10/90, a weight ratio of a total amount of the polylactic acid resin (A) and the methacrylic resin (B) to the thermoplastic resin (C) having a refractive index in a range of 1.45 to 1.50 is 99/1 to 1/99, and the methacrylic resin (B) has a weight average molecular weight of 50,000 to 450,000 and satisfies at least one of condition (1) that a glass transition temperature is 110°C or more and condition (2) that a syndiotacticity is 40% or more is disclosed.

Further, in Patent Document 1, as the thermoplastic resin (C) having a refractive index in a range of 1.45 to 1.50, a cellulose resin (cellulose ester compound) is disclosed.

### PRIOR ART DOCUMENT

### PATENT DOCUMENT

Patent Document 1: Japanese Patent No. 5298496

### SUMMARY OF THE INVENTION

### PROBLEMS THAT THE INVENTION IS TO SOLVE

By the way, when a poly(meth)acrylate compound (B) and a polyester resin (C) are blended into a cellulose ester compound (A), impact resistance of a resin molded article obtained is improved while suppressing the decrease in transparency. However, a further improvement in the impact resistance is required for resin molded articles.

Therefore, at least one exemplary embodiment of the invention provides a resin composition which is capable of obtaining a resin molded article excellent in the impact resistance while suppressing the decrease in transparency in comparison with a resin composition containing only a cellulose ester compound (A), a poly(meth)acrylate compound (B) and a polyester resin (C).

### MEANS FOR SOLVING THE PROBLEMS

The problem described above is achieved by the embodiments of the invention described below.
[1] At least one embodiment of the invention is
   a resin composition containing
   a cellulose ester compound (A),
   a poly(meth)acrylate compound (B),
   a polyester resin (C) and
   an ester compound (D) having a molecular weight of 250 or more and 2,000 or less.
[2] In the resin composition as described in [1], the cellulose ester compound (A) may be at least one selected from cellulose acetate propionate (CAP) and cellulose acetate butyrate (CAB).
[3] In the resin composition as described in [2], the cellulose ester compound (A) may be cellulose acetate propionate (CAP).
[4] In the resin composition as described in any one [1] to [3], the poly(meth)acrylate compound (B) may be a compound containing 50% by mass or more of a constituting unit derived from a (meth)acrylic acid alkyl ester.
[5] In the resin composition as described in [4], the poly(meth)acrylate compound (B) may be a poly(meth)acrylic acid alkyl ester in which a number of carbon atoms in the alkyl chain is 1 or more and 8 or less.
[6] In the resin composition as described in [5], wherein the poly(meth)acrylate compound (B) may be polymethyl methacrylate.
[7] In the resin composition as described in any one of [1] to [6], the polyester resin (C) may be a polyhydroxyalkanoate.
[8] In the resin composition as described in [7], the polyester resin (C) may be polylactic acid.
[9] In the resin composition as described in any one of [1] to [8], the ester compound (D) may be a fatty acid ester compound.
[10] In the resin composition as described in [9], wherein the ester compound (D) may be an adipic acid ester-containing compound.
[11] The resin composition as described in any one of [1] to [10] may further contain a thermoplastic elastomer compound (E).
[12] In the resin composition as described in [11], the thermoplastic elastomer compound (E) may be a (meth)acrylic thermoplastic elastomer.
[13] In the resin composition as described in any one of [1] to [12], a content of the ester compound (D) with respect to the cellulose ester compound (A) may be 1% by mass or more and 40% by mass or less.
[14] In the resin composition as described in [13], a content of the cellulose ester compound (A) with respect to the resin composition may be 50% by mass or more.
[15] Other embodiment of the invention is
   a resin molded article containing the resin composition as described in any one of [1] to [14].
[16] In the resin molded article as described in [15], a haze value of the resin molded article in case of having a thickness of 2 mm may be 10% or less.
[17] The resin molded article as described in [15] or [16] may be an injection molded article.

### EFFECT OF THE INVENTION

According to the resin composition as described in [1], a resin molded article excellent in the impact resistance while suppressing the decrease in transparency is obtained in comparison with a resin composition containing only a cellulose ester compound (A), a poly(meth)acrylate compound (B) and a polyester resin (C).

According to the resin composition as described in [2] or [3], a resin molded article excellent in the impact resistance while suppressing the decrease in transparency is obtained in comparison with the case wherein the cellulose ester compound (A) is cellulose diacetate (DAC).

According to the resin composition as described in [4], [5] or [6], a resin molded article excellent in the impact resistance while suppressing the decrease in transparency is obtained in comparison with the case wherein the poly(meth)acrylate compound (B) is a compound containing less than 50% by mass of a constituting unit derived from a (meth)acrylic acid alkyl ester.

According to the resin composition as described in [7], a resin molded article containing a polyhydroxy alkanoate as the polyester resin (C) and being excellent in the impact resistance while suppressing the decrease in transparency is obtained in comparison with a resin composition containing only a cellulose ester compound (A), a poly(meth)acrylate compound (B) and a polyester resin (C).

According to the resin composition as described in [8], a resin molded article excellent in the impact resistance while suppressing the decrease in transparency is obtained in comparison with the case wherein the polyester resin (C) is a copolymer of 3-hydroxybutyric acid (3-hydroxybutyrate) and 3-hydroxyhexanoic acid (3 -hydroxyhexanoate).

According to the resin composition as described in [9], a resin molded article containing a fatty acid ester compound as the ester compound (D) and being excellent in the impact resistance while suppressing the decrease in transparency is obtained in comparison with a resin composition containing only a cellulose ester compound (A), a poly(meth)acrylate compound (B) and a polyester resin (C).

According to the resin composition as described in [10], a resin molded article excellent in the impact resistance while suppressing the decrease in transparency is obtained in comparison with the case wherein the ester compound (D) is a citric acid ester compound.

According to the resin composition as described in [11] or [12], a resin molded article excellent in the impact resistance while suppressing the decrease in transparency is obtained in comparison with the case wherein a thermoplastic elastomer compound (E) is not contained.

According to the resin composition as described in [13], a resin molded article excellent in the impact resistance while suppressing the decrease in transparency is obtained in comparison with the case wherein a content of the ester compound (D) with respect to the cellulose ester compound (A) is less than 1% by mass or more than 40% by mass.

According to the resin composition as described in [14], a resin molded article containing the cellulose ester compound (A) as the main component and being excellent in the impact resistance while suppressing the decrease in transparency is obtained in comparison with a resin composition containing only a cellulose ester compound (A), a poly(meth)acrylate compound (B) and a polyester resin (C).

According to the resin molded article as described in [15], [16] or [17], a resin molded article excellent in the impact resistance while suppressing the decrease in transparency is provided in comparison with the case of applying a resin composition containing only a cellulose ester compound (A), a poly(meth)acrylate compound (B) and a polyester resin (C).

### MODE FOR CARRYING OUT THE INVENTION

Hereinafter, an exemplary embodiment which is an example of the invention will be described.

In the specification, in the case wherein a substance corresponding to the each component is present in plurality in the object, an amount of each component in the object means a total content rate or a total content of the plural substances present in the object unless otherwise specified.

Further, the description of "polymer of A" is an expression including a copolymer of A and a monomer other than A in addition to a homopolymer of only A. Similarly, the description of "copolymer of A and B" is an expression including a copolymer of A, B and a monomer other than A and B in addition to a copolymer of only A and B (hereinafter, also referred to as "single copolymer" for convenience).

Further, the cellulose ester compound (A), poly(meth)acrylate compound (B), polyester resin (C) and ester compound (D) are also referred to as component (A), component (B) component (C) and component (D), respectively.

### <Resin composition>

The resin composition according to the exemplary embodiment contains a cellulose ester compound (A), a poly(meth)acrylate compound (B), a polyester resin (C) and an ester compound (D) having a molecular weight of 250 or more and 2,000 or less. The resin composition according to the exemplary embodiment may contain other components.

Hitherto, since the cellulose ester compound (A) (in particular, a cellulose acylate in which a part of hydroxy groups is substituted with an acyl group) is based on non-edible resources and is a primary derivative not requiring chemical polymerization, it is a resin material friendly to the environment. Further, due to the strong hydrogen bond property it has a high elastic modulus as the resin material. Moreover, it has the feature of high transparency because of the alicyclic structure.

By the way, the cellulose ester compound has a high elastic modulus and a rigid property, but on the other hand, it is brittle and has a property of low impact resistance. However, when a third component is blended into the cellulose ester compound for the purpose of enhancing impact resistance of a resin molded article, the transparency decreases in many cases.

On this point, when the poly(meth)acrylate compound (B) and the polyester resin (C) are blended into the cellulose ester compound, the impact resistance of a resin molded article obtained is improved while suppressing the decrease in transparency. However, further increase in the impact resistance has been required for the resin molded article.

On the contrary, the resin composition according to the exemplary embodiment provides a resin molded article excellent in the impact resistance while suppressing the decrease in transparency by taking the configuration described above in comparison with the case wherein only the cellulose ester compound (A), the poly(meth)acrylate compound (B) and the polyester resin (C) are contained. The reason for this is presumed to be as follows.

First, the reason for increasing the impact resistance is described.

In the cellulose ester compound (A), molecular chains tend to be oriented because of the strong intramolecular or intermolecular hydrogen bond. Therefore, in the case wherein the ester compound (D) is not blended into the resin composition, anisotropy of the orientation of the cellulose ester compound (A) in the resin composition is easy to increase. When the anisotropy of the orientation of the cellulose ester compound (A) is large, strength of the resin molded article in the flow direction (MD) of the resin composition is remarkably decreases. When the ester compound (D) is blended into the resin composition, the ester compound (D) penetrates between the molecular chains of the cellulose ester compound (A) so that the ester compound (D) weakens the hydrogen bond between the molecules of the cellulose ester compound (A), thereby suppressing the orientation of the molecular chains of the cellulose ester compound (A). Therefore, it is assumed that the anisotropy of the orientation of the cellulose ester compound (A) in the resin composition is also weakened so that the impact resistance of the resin molded article is improved.

Further, in addition to the above, a phase (domain) in which the poly(meth)acrylate compound (B) and the polyester resin (C) are compatibilized is formed in a phase of the cellulose ester compound (A). In the phase (domain), the ester compound (D) has affinity to the poly(meth)acrylate compound (B) and the polyester resin (C) so that the domain is reduced in size. That is, dispersibility of the phase (domain) in which the poly(meth)acrylate compound (B) and the polyester resin (C) are compatibilized in the phase of the cellulose ester compound (A) is increased and thus uniformity of the resin composition is increased. As a result, it is assumed that the impact resistance of the resin molded article obtained from the resin composition is increased.

Next, the reason for suppressing the decrease in transparency is described.

Although each of the component (B) and the component (C) has high compatibility with the component (A), they are not completely compatibilized when they are mixed. Thus, in the case wherein the component (A) and the component (B) are mixed, a phase (hereinafter, also referred to as "(A) phase") of the component (A) and a phase of the component (B) are formed. Similarly, in the case wherein the component (A) and the component (C) are mixed, a (A) phase and a phase of the component (C) are formed. Therefore, due to difference in refractive index of each component, the respective mixtures (in other words, the resin composition) have a tendency of decreasing the transparency.

On the other hand, the refractive index of each component decreases in the order of the component (C), the component (A) and the component (B). In other words, the refractive index of the component (C) is higher than that of the component (A) and the refractive index of the component (B) is lower than that of the component (A). In addition to the above, since the compatibility between the component (B) and the component (C) is higher than the compatibility of the component (A), when the component (A), the component (B) and the component (C) are mixed, the (A) phase and a phase (hereinafter, also referred to as "(B+C) phase") in which the component (B) and the component (C) are compatibilized are formed. Thus, because of the formation of the (B+C) phase by the component (B) and the component (C) wherein the difference in refractive index therebetween is large, the refractive index of the (B+C) phase gets close to the refractive index of the phase (A) (in other words, the component (A)). As a result, the decrease in transparency of the mixture of the component (A), component (B) and the component (C) (in other words, the resin composition) is suppressed.

In addition, even when the component (D) is blended into the three-component system of the component (A), the component (B) and the component (C), the decrease in transparency is suppressed. The reason for this is because it is assumed that a difference in affinity of the component (D) to the (A) phase and the (B+C) phase is small and the component (D) is relatively evenly dispersed in the both phases.

From the above, it is presumed that the resin composition according to the exemplary embodiment provides a resin molded article excellent in the impact resistance while suppressing the decrease in transparency.

In particular, the resin molded article obtained by the resin composition according to the exemplary embodiment is often not completely destructed and results in an incomplete destruction to form a test piece which is integrally connected with a hinge-shaped layer and not separated in Charpy impact test.

Therefore, the resin composition according to the exemplary embodiment easily provide a resin molded article which has high toughness, is hardly reached to a complete destruction even when an impact is applied, and is hardly form a sharp corner in the destructed portion.

Hereinafter, the components of the resin composition according to the exemplary embodiment will be described in detail.

### [Cellulose ester compound (A): Component (A)]

The cellulose ester compound (A) is, for example, a resin of a cellulose derivative (cellulose acylate) in which at least a part of hydroxy groups in cellulose is substituted with an acyl group (acylation). Specifically, the cellulose ester compound (A) is, for example, a cellulose derivative represented by formula (CE).

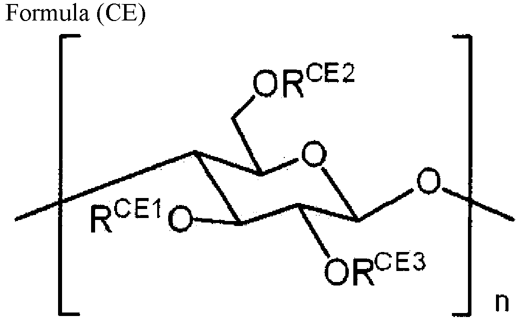

In formula (CE), each of R^{CE1}, R^{CE2} and R^{CE3} independently represents a hydrogen atom or an acyl group. n represents an integer of 2 or more, provided that at least a part of nR^{CE1}s, nR^{CE2}s and nR^{CE3}s represents an acyl group.

The acyl group represented by each of R^{CE1}, R^{CE2} and R^{CE3} is preferably an acyl group having 1 or more and 6 or less carbon atoms.

In formula (CE), a range of n is not particularly limited, and is preferably 200 or more and 1,000 or less, and more preferably 500 or more and 1,000 or less.

When each of R^{CE1}, R^{CE2} and R^{CE3} independently represents an acyl group in formula (CE), it indicates that at least a part of hydroxy groups of the cellulose derivative represented by formula (CE) is acylated.

In other words, n R^{CE1}s in the molecule of the cellulose derivative represented by formula (CE) may be all the same, partially same or different from each other. Similarly, n R^{CE2}s and n R^{CE3}s may also be all the same, partially same or different from each other, respectively.

Here, the cellulose ester compound (A) preferably has an acyl group having 1 or more and 6 or less carbon atoms as the acyl group. Such a cellulose ester compound (A) easily provides a resin molded article excellent in the impact resistance while suppressing the decrease in transparency in comparison with the case of having an acyl group having 7 or more carbon atoms.

The acyl group is represented by a structure of "-CO-R^{AC}" wherein R^{AC} represents a hydrogen atom or a hydrocarbon group (more preferably, a hydrocarbon group having 1 or more and 5 or less carbon atoms).

The hydrocarbon group represented by R^{AC} may have any of a straight-chain, branched or cyclic form, and more preferably has a straight-chain form.

The hydrocarbon group represented by R^{AC} may be a saturated hydrocarbon group or an unsaturated hydrocarbon group, and is more preferably a saturated hydrocarbon group.

The hydrocarbon group represented by R^{AC} may contain an atom (for example, oxygen or nitrogen) other than carbon and hydrogen, and is more preferably a hydrocarbon group composed of only carbon and hydrogen.

The acyl group includes, for example, a formyl group, an acetyl group, a propionyl group, a butyryl group (butanoyl group), a propenoyl group and a hexanoyl group.

Among these, as the acyl group, an acyl group having 2 or more and 4 or less carbon atoms is preferred, and an acyl group having 2 or more and 3 or less carbon atoms is more preferred from the standpoint of suppressing the decrease in transparency and increasing the impact resistance of the resin molded article obtained as well as increasing moldability of the resin composition.

The cellulose ester compound (A) includes, for example, cellulose acetate (cellulose monoacetate, cellulose diacetate (DAC), cellulose triacetate), cellulose acetate propionate (CAP) and cellulose acetate butyrate (CAB).

The cellulose ester compounds (A) may be used one kind alone or may be used two or more kinds in combination.

Among these, as the cellulose ester compound (A), cellulose acetate propionate (CAP) and cellulose acetate butyrate (CAB) are preferred, and cellulose acetate propionate (CAP) is more preferred from the standpoint of suppressing the decrease in transparency and increasing the impact resistance of the resin molded article obtained.

The weight average polymerization degree of the cellulose ester compound (A) is preferably 200 or more and 1,000 or less, and more preferably 500 or more and 1,000 or less from the standpoint of suppressing the decrease in transparency and increasing the impact resistance of the resin molded article obtained as well as increasing moldability of the resin composition.

Here, the weight average polymerization degree is determined according to the procedure described below using a weight average molecular weight (Mw).

First, a weight average molecular weight (Mw) of the cellulose ester compound (A) is determined by measuring with a gel permeation chromatography apparatus (GPC apparatus: HLC-8320GPC manufactured by Tosoh Corp., column: TSKgel α-M) using tetrahydrofuran and calculating in terms of polystyrene.

Subsequently, the value for weight average molecular weight is divided by a constituting unit molecular weight of the cellulose ester compound (A) to determine the polymerization degree of the cellulose ester compound (A). In addition, for example, in the case wherein the substituent of the cellulose acylate is an acetyl group, the constituting unit molecular weight is 263 when the substitution degree is 2.4, and it is 284 when the substitution degree is 2.9.

The substitution degree of the cellulose ester compound (A) is preferably 2.1 or more and 2.8 or less, more preferably 2.2 or more and 2.8 or less, still more preferably 2.3 or more and 2.75 or less, and particularly preferably 2.35 or more and 2.75 or less from the standpoint of suppressing the decrease in transparency and increasing the impact resistance of the resin molded article obtained as well as increasing moldability of the resin composition.

In addition, in cellulose acetate propionate (CAP), a ratio (acetyl group/propionyl group) of substitution degree of an acetyl group and a propionyl group is preferably 5/1 or more and 1/20 or less, and more preferably 3/1 or more and 1/15 or less from the standpoint of suppressing the decrease in transparency and increasing the impact resistance of the resin molded article obtained as well as increasing moldability of the resin composition.

In cellulose acetate butyrate (CAB), a ratio (acetyl group/butyryl group) of substitution degree of an acetyl group and a butyryl group is preferably 5/1 or more and 1/20 or less, and more preferably 4/1 or more and 1/15 or less from the standpoint of suppressing the decrease in transparency and increasing the impact resistance of the resin molded article obtained as well as increasing moldability of the resin composition.

Here, the substitution degree is an index for expressing a degree of substitution of hydroxy group of cellulose with an acyl group. In other words, the substitution degree is an index for expressing a degree of acylation of the cellulose ester compound (A). Specifically, the substitution degree means an intramolecular average value of a substitution number of three hydroxy groups in D-glucopyranose unit of cellulose acylate with an acyl group.

The substitution degree is measured from a ratio of integrated values of hydrogen derived from cellulose and a peak derived from an acyl group with H¹-NMR (JMN-ECA manufactured by JEOL RESONANCE Inc.).

### [Poly(meth)acrylate compound (B): Component (B)]

The poly(meth)acrylate compound (B) is a compound (resin) having a constituting unit derived from a (meth)acrylic acid ester (preferably (meth)acrylic acid alkyl ester). The poly(meth)acrylate compound (B) may be a compound (resin) having a constituting unit derived from a monomer other than the (meth)acrylic acid ester.

In addition, the constituting unit (unit derived from a monomer) in the poly(meth)acrylate compound (B) may be one kind alone or two or more kinds.

The poly(meth)acrylate compound (B) is preferably a compound (polymer) containing 50% by mass or more (preferably 70% by mass or more, more preferably 90% by mass or more, still more preferably 100% by mass) of a constituting unit derived from a (meth)acrylic acid alkyl ester from the standpoint of suppressing the decrease in transparency and increasing the impact resistance of the resin molded article obtained

The (meth)acrylic acid alkyl ester includes, for example, methyl (meth)acrylate, ethyl (meth)acrylate, n-propyl (meth)acrylate, n-butyl (meth)acrylate, n-pentyl (meth)acrylate, n-hexyl (meth)acrylate, n-heptyl (meth)acrylate, n-octyl (meth)acrylate, n-decyl (meth)acrylate, isopropyl (meth)acrylate, isobutyl (meth)acrylate, tert-butyl (meth)acrylate, isopentyl (meth)acrylate, amyl (meth)acrylate, neopentyl (meth)acrylate, isohexyl (meth)acrylate, isoheptyl (meth)acrylate, isooctyl (meth)acrylate, 2-ethylhexyl (meth)acrylate, octyl (meth)acrylate, decyl (meth)acrylate, cyclohexyl (meth)acrylate and dicyclopentanyl (meth)acrylate.

Among these, the (meth)acrylic acid alkyl ester is suitably a (meth)acrylic acid alkyl ester in which a number of carbon atoms of the alkyl chain is 1 or more and 8 or less (preferably 1 or more and 4 or less, more preferably 1 or more and 2 or less, still more preferably 1) from the standpoint of suppressing the decrease in transparency and increasing the impact resistance of the resin molded article obtained.

Since as the alkyl chain of the poly(meth)acrylate compound (B) is short, the SP value thereof gets close to that of the polyester resin (C), the compatibility between the poly(meth)acrylate compound (C) and the polyester resin (C) is increased to achieve improvement in haze.

In other words, the poly(meth)acrylate compound (B) is suitably a polymer containing 50% by mass or more (preferably 70% by mass or more, more preferably 90% by mass or more, still more preferably 100% by mass) of a constituting unit derived from a (meth)acrylic acid alkyl ester in which a number of carbon atoms of the alkyl chain is 1 or more and 8 or less (preferably 1 or more and 4 or less, more preferably 1 or more and 2 or less, still more preferably 1).

The poly(meth)acrylate compound (B) is suitably a polymer containing 100% by mass of constituting unit derived from a (meth)acrylic acid alkyl ester in which a number of carbon atoms of the alkyl chain is 1 or more and 8 or less (preferably 1 or more and 4 or less, more preferably 1 or more and 2 or less, still more preferably 1). That is, the poly(meth)acrylate compound (B) is suitably a poly(meth)acrylic acid alkyl ester in which a number of carbon atoms of the alkyl chain is 1 or more and 8 or less (preferably 1 or more and 4 or less, more preferably 1 or more and 2 or less, still more preferably 1). In addition, a poly(meth)acrylic acid alkyl ester in which a number of carbon atoms of the alkyl chain is 1 is preferably polymethyl methacrylate.

In addition, the monomer other than the (meth)acrylic acid ester in the poly(meth)acrylate compound (B) includes, for example, a styrene [a monomer having a styrene skeleton, for example, styrene, an alkyl substituted styrene (for example, α-methylstyrene, 2-methylstyrene, 3-methylstyrene, 4-methylstyrene, 2-ethylstyrene, 3-ethylstyrene or 4-ethylstyrene), a halogenated styrene (for example, 2-chlorostyrene, 3-chlorostyrene or 4-chlorostyrene), a vinylnaphthalene (for example, 2-vinylnaphthalene) or a hydroxystyrene (for example, 4-ethenylphenol)], and an unsaturated dicarboxylic acid anhydride [a compound having an ethylenic double bond and a dicarboxylic acid anhydride group, for example, maleic anhydride, itaconic anhydride, glutaconic anhydride, citraconic anhydride or aconic anhydride].

The weight average molecular weight (Mw) of the poly(meth)acrylate compound (B) is not particularly limited, and is suitably 15,000 or more and 120,000 or less (preferably more than 20,000 and 100,000 or less, more preferably 22,000 or more and 100,000 or less, still more preferably 25,000 or more and 100,000 or less).

In particular, from the standpoint of suppressing the decrease in transparency and increasing the impact resistance of the resin molded article obtained, the weight average molecular weight (Mw) of the poly(meth)acrylate compound (B) is preferably less than 50,000 (that is, less than fifty thousand), more preferably 40,000 or less, and still more preferably 35,000 or less. However, the weight average molecular weight (Mw) of the poly(meth)acrylate compound (B) is suitably 15,000 or more.

The weight average molecular weight (Mw) of the polymethyl methacrylate is a value measured by gel permeation chromatography (GPC). Specifically, the measurement of molecular weight by GPC is performed using as a measurement apparatus, HLC-8320GPC manufactured by Tosoh Corp., as a column, TSKgel α-M manufactured by Tosoh Corp., and as a solvent, tetrahydrofuran. Then, the weight average molecular weight (Mw) is calculated from the measurement result by using a molecular weight calibration curve prepared using a monodisperse polystyrene standard sample.

### [Polyester resin (C): Component (C)]

The polyester resin (C) includes, for example, a polymer of a hydroxyalkanoate (hydroxyalkanoic acid), a polycondensate of a polyvalent carboxylic acid and a polyhydric alcohol, and a ring-opening polycondensate of a cyclic lactam.

As the polyester resin (C), an aliphatic polyester resin is suitable. The aliphatic polyester resin includes, for example, a polyhydroxyalkanoate (polymer of hydroxyalkanoate) and a polycondensate of an aliphatic diol and an aliphatic carboxylic acid.

Among these, as the polyester resin (C), a polyhydroxyalkanoate is preferred from the standpoint of suppressing the decrease in transparency and increasing the impact resistance of the resin molded article obtained.

The polyhydroxyalkanoate includes, for example, a compound having a structural unit represented by formula (PHA).

In the compound having a structural unit represented by formula (PHA), as to terminals of a polymer chain (terminals of a main chain), both terminals may be carboxyl groups or only one terminal may be a carboxylic group and the other terminal may be other group (for example, a hydroxy group).

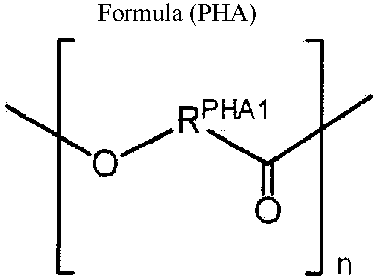

In formula (PHA), R^{PHA1} represents an alkylene group having 1 or more and 10 or less carbon atoms. n represents an integer of 2 or more.

In formula (PHA), the alkylene group represented by R^{PHA1} is preferably an alkylene group having 3 or more and 6 or less carbon atoms. The alkylene group represented by R^{PHA1} may have any of a straight-chain and branched form, and preferably has a branched form.

Here, the term "R^{PHA1} in formula (PHA) represents an alkylene group" indicates (1) that formula (PHA) includes the same [O-R^{PHA1}-C(-O)-] structure in which R^{PHA1} represents the same alkylene group or (2) that formula (PHA) includes a plurality of [O-RP^{HA1}-C(=O)-] structures (that is, [O- R^{PHA1A}-C(-O)-] [O-R^{PHA1B}-C(=O)-] structures) in which R^{PHA1} represents a different alkylene group (R^{PHA1} represents an alkylene group different in the number of carbon atoms or the branched state).

In other words, the polyhydroxyalkanoate may be a homopolymer composed of one kind of hydroxyalkanoate (hydroxyalkanoic acid) or may be a copolymer composed of two or more kinds of hydroxyalkanoates (hydroxyalkanoic acids).

In formula (PHA), the upper limit of n is not particularly limited, and is, for example, 20,000 or less. The range of n is preferably 500 or more and 10,000 or less, and more preferably 1,000 or more and 8,000 or less.

The polyhydroxyalkanoate includes, for example, a homopolymer of a hydroxyalkanoic acid (for example, lactic acid, 2-hydroxybutyric acid, 3-hydroxybutyric acid, 4-hydroxybutyric acid, 2-hydroxy-3-methylbutyric acid, 2-hydroxy-3,3-dimethylbutyric acid, 3-hydroxyvaleric acid, 4-hydroxyvaleric acid, 5-hydroxyvaleric acid, 3-hydroxyhexanoic acid, 2-hydroxyhexanoic acid, 2-hydroxyisohexanoic acid, 6-hydroxyhexanoic acid, 3-hydroxypropionic acid, 3-hydroxy-2,2-dimethylpropionic acid, 3-hydroxyhexanoic acid or 2-hydroxy-n-octanoic acid) and a copolymer of two or more kinds of the hydroxyalkanoic acids.

Among these, the polyhydroxyalkanoate is preferably a homopolymer of a branched hydroxyalkanoic acid having 2 or more and 4 or less carbon atoms or a single copolymer of only a branched hydroxyalkanoic acid having 2 or more and 4 or less carbon atoms and a branched hydroxyalkanoic acid having 5 or more and 7 or more carbon atoms, more preferably a homopolymer of a branched hydroxyalkanoic acid having 3 carbon atoms (in other words, polylactic acid) or a single copolymer of only 3-hydrobutyric acid and 3-hydroxyhexanoic acid (in other words, polyhydroxybutyrate-hexanoate), and still more preferably a homopolymer of a branched hydroxyalkanoic acid having 3 carbon atoms (in other words, polylactic acid) from the standpoint of suppressing the decrease in transparency and increasing the impact resistance of the resin molded article obtained.

The number of carbon atoms of the hydroxyalkanoic acid is a number containing the carbon atom of the carboxyl group.

Polylactic acid is a polymer compound in which lactic acids are polymerized through an ester bond.

The polylactic acid includes, for example, a homopolymer of L-lactic acid, a homopolymer of D-lactic acid, a block copolymer containing a polymer of at least on of L-lactic acid and D-lactic acid, and a graft copolymer containing a polymer of at least on of L-lactic acid and D-lactic acid.

The compound copolymerizable with L-lactic acid or D-lactic acid described above includes, for example, a polyvalent carboxylic acid, for example, glycolic acid, dimethylglycolic acid, 3-hydroxybutyric acid, 4-hydroxybutyric acid, 2-hydroxypropanoic acid, 3-hydroxypropanoic acid, 2-hydroxyvaleric acid, 3-hydroxyvaleric acid, 4-hydroxyvaleric acid, oxalic acid, malonic acid, succinic acid, glutaric acid, adipic acid, pimelic acid, azelaic acid, sebacic acid, undecanedioic acid, dodecanedioic acid or terephthalic acid, and an anhydride thereof; a polyhydric alcohol, for example, ethylene glycol, diethylene glycol, triethylene glycol, 1,2-propanediol, 1,3-propanediol, 1,3-butanediol, 1,4-butanediol, 2,3-butanediol, 1,5-pentanediol, 1,6-hexanediol, 1,9-nonanediol, 3-methyl-1,5-pentanediol, neopentyl glycol, tetramethylene glycol or 1,4-hexanedimethanol; a polysaccharide, for example, cellulose; an aminocarboxylic acid, for example, α-amino acid; a hydroxycarboxylic acid, for example, 5-hydroxyvaleric acid, 2-hydroxycaproic acid, 3-hydroxycaproic acid, 4-hydroxycaproic acid, 5-hydroxycaproic acid, 6-hydroxycaproic acid, 6-hydroxymethylcaproic acid or mandelic acid; and a cyclic ester, for example, glycolide, β-methyl-δ-valerolactone, γ-valerolactone or ε-caprolactone.

It is known that the polylactic acid can be produced, for example, by a lactide method via a lactide; or a direct polymerization method in which lactic acid is heated in a solvent under a reduced pressure to polymerize while removing water.

In the polyhydroxybutyrate-hexanoate, a copolymerization ratio of 3-hydroxyhexanoic acid (3-hydroxyhexanoate) with respect to the copolymer of 3-hydroxybutyric acid (3-hydroxybutyrate) and 3-hydroxyhexanoic acid (3-hydroxyhexanoate) is preferably 3% by mole or more and 20% by mole or less, more preferably 4% by mole or more and 15% by mole or less, and still more preferably 5% by mole or more and 12% by mole or less from the standpoint of suppressing the decrease in transparency and increasing the impact resistance of the resin molded article obtained.

In addition, as to a measurement method of the copolymerization ratio of 3-hydroxyhexanoic acid (3-hydroxyhexanoate), a hexanoate ratio is calculated from integrated values of peaks derived from a hexanoate terminal and a butyrate terminal with H¹-NMR.

The weight average molecular weight (Mw) of the polyester resin (C) is suitably 10,000 or more and 1,000,000 or less (preferably 50,000 or more and 800,000 or less, more preferably 100,000 or more and 600,000 or less) from the standpoint of suppressing the decrease in transparency and increasing the impact resistance of the resin molded article obtained.

The weight average molecular weight (Mw) of the polyester resin (C) is a value measured by gel permeation chromatography (GPC). Specifically, the measurement of molecular weight by GPC is performed using as a measurement apparatus, HPLC1100 manufactured by Tosoh Corp., as columns, TSKgel GMHHR-M + TSKgel GMHHR-M (7.8 mm I.D. 30 cm) manufactured by Tosoh Corp., and as a solvent, chloroform. Then, the weight average molecular weight (Mw) is calculated from the measurement result by using a molecular weight calibration curve prepared using a monodisperse polystyrene standard sample.

### [Ester compound (D): Component (D)]

The ester compound (D) is a compound having an ester group (-C(=O)O-) and a molecular weight of 250 or more and 2,000 or less (preferably 250 or more and 1,000 or less, more preferably 250 or more and 600 or less).

In addition, in the case of using two or more kinds of the ester compounds (D) in combination, the ester compounds each having a molecular weight of 250 or more and 2,000 or less are used in combination.

The ester compound (D) includes, for example, a fatty acid ester compound and an aromatic carboxylic acid ester compound.

Among these, as the ester compound (D), a fatty acid ester compound is preferred from the standpoint of suppressing the decrease in transparency and increasing the impact resistance of the resin molded article obtained.

The fatty acid ester compound includes, for example, an aliphatic monocarboxylic acid ester (for example, an acetic acid ester), an aliphatic dicarboxylic acid ester (for example, a succinic acid ester, an adipic acid ester-containing compound, an azelaic acid ester, a sebacic acid ester or a stearic acid ester), an aliphatic tricarboxylic acid ester (for example, a citric acid ester or an isocitric acid ester), an ester group-containing epoxy compound (for example, epoxidized soy oil, epoxidized linseed oil, epoxidized rapeseed fatty acid isobutyl ester or epoxidized fatty acid 2-ethylhexyl ester), a fatty acid methyl ester and a sucrose ester.

The aromatic carboxylic acid ester compound includes, for example, dimethyl phthalate, diethyl phthalate, bis(2-ethylhexyl) phthalate and a terephthalic acid ester.

Among these, an aliphatic dicarboxylic acid ester and an aliphatic tricarboxylic acid ester are preferred, an adipic acid ester-containing compound and a citric acid ester are more preferred, and an adipic acid ester-containing compound is still more preferred from the standpoint of suppressing the decrease in transparency and increasing the impact resistance of the resin molded article obtained.

The adipic acid ester-containing compound (compound containing an adipic acid ester) refers to a compound of an adipic acid ester alone and a mixture of an adipic acid ester and a component other than the adipic acid ester (compound different from the adipic acid ester). However, the adipic acid ester-containing compound suitably contains 50% by mass or more of the adipic acid ester with respect to the total components.

The adipic acid ester includes, for example, an adipic acid diester. Specifically, it includes, for example, an adipic acid diester represented by formula (AE) shown below.

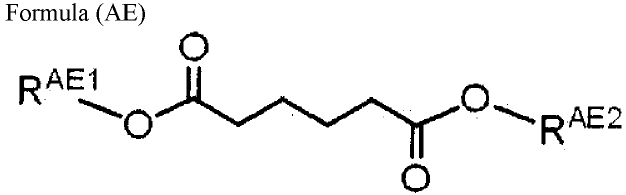

In formula (AE), each of R^{AE1} and R^{AE2} independently represents an alkyl group or a polyoxyalkyl group [-(CₓH_{2X}-O)_{y}-R^{A1}] (wherein R^{A1} represents an alkyl group, x represents an integer of 1 or more and 10 or less, and y represents an integer of 1 or more and 10 or less).

In formula (AE), the alkyl group represented by R^{AE1} or R^{AE2} is preferably an alkyl group having 1 or more and 6 or less carbon atoms, and more preferably an alkyl group having 1 or more and 4 or less carbon atoms. The alkyl group represented by R^{AE1} or R^{AE2} may have any of a straight-chain, branched and cyclic form, and preferably has a straight-chain or branched form.

In formula (AE), in the polyoxyalkyl group [-(CₓH₂x-O)_{y}-R^{A1}] represented by R^{AE1} or R^{AE2} the alkyl group represented by R^{A1} is preferably an alkyl group having 1 or more and 6 or less carbon atoms, and more preferably an alkyl group having 1 or more and 4 or less carbon atoms. The alkyl group represented by R^{A1} may have any of a straight-chain, branched and cyclic form, and preferably has a straight-chain or branched form.

In formula (AE), the group represented by each symbol may be substituted with a substituent. The substituent includes, for example, an alkyl group, an aryl group and a hydroxy group.

On the other hand, the citric acid ester includes, for example, an alkyl (having 1 or more and 12 or less (preferably 1 or more and 8 or less) carbon atoms,) ester of citric acid. The citric acid ester may be a citric acid ester acylated with an alkylcarboxylic anhydride (for example, an alkylcarboxylic anhydride having a straight chain or branched alkyl group having 2 or more and 6 or less (preferably 2 or more and 3 or less) carbon atoms, for example, acetic anhydride, propionic anhydride, butyric anhydride or valeric anhydride).

### [Content or mass ratio of Component (A) to Component (D)]

The content or mass ratio of each component will be described. The content or mass ratio of each component is preferably in the range described below from the standpoint of suppressing the decrease in transparency and increasing the impact resistance of the resin molded article obtained. The abbreviation of each component is as follows.
Component (A): Cellulose ester compound (A)
Component (B): Poly(meth)acrylate compound (B)
Component (C): Polyester resin (C)
Component (D): Ester compound (D)

A mass ratio [(A)/((A)+(B)+(C)+(D))] of Component (A) with respect to the total of Component (A), Component (B), Component (C) and Component (D) is preferably 0.50 or more and 0.95 or less, more preferably 0.60 or more and 0.90 or less, and still more preferably 0.70 or more and 0.85 or less.

A mass ratio [(B)/((A)+(B)+(C)+(D))] of Component (B) with respect to the total of Component (A), Component (B), Component (C) and Component (D) is preferably 0.01 or more and 0.3 or less, more preferably 0.015 or more and 0.2 or less, and still more preferably 0.02 or more and 0.15 or less.

A mass ratio [(C)/((A)+(B)+(C)+(D))] of Component (C) with respect to the total of Component (A), Component (B), Component (C) and Component (D) is preferably 0.01 or more and 0.3 or less, more preferably 0.015 or more and 0.2 or less, and still more preferably 0.02 or more and 0.15 or less.

A mass ratio [(D)/((A)+(B)+(C)+(D))] of Component (D) with respect to the total of Component (A), Component (B), Component (C) and Component (D) is preferably 0.05 or more and 0.2 or less, more preferably 0.07 or more and 0.15 or less, and still more preferably 0.09 or more and 0.12 or less.

The content of Component (D) with respect to Component (A) is preferably 1 % by mass or more and 70% by mass or less, more preferably 5 % by weigh or more and 40% by mass or less, and still more preferably 7.5 % by weigh or more and 20% by mass or less.

The content of Component (A) with respect to the rein composition is preferably 50% by mass or more, more preferably 60% by mass or more, and still more preferably 70% by mass or more from the standpoint of suppressing the decrease in transparency and increasing the impact resistance of the resin molded article obtained.

### [Other components]

The resin composition according to the exemplary embodiment preferably contains a thermoplastic elastomer compound (E) from the standpoint of suppressing the decrease in transparency and increasing the impact resistance of the resin molded article obtained.

The thermoplastic elastomer compound (E) is, for example, an elastomer which has the nature of rubber at normal temperature (25°C) and has a property of softening at high temperature similar to a thermoplastic resin. The thermoplastic elastomer includes, for example, a (meth)acrylic thermoplastic elastomer and a styrene thermoplastic elastomer.

The (meth)acrylic thermoplastic elastomer includes, for example, a polymer of two or more kinds of (meth)acrylic acid alkyl esters and a polymer of an olefin and a (meth)acrylic acid alkyl ester. Specifically, it includes, for example, a polymethyl methacrylate-poly-n-butyl acrylate-polymethyl methacrylate block copolymer, a polymethyl methacrylate-polydodecyl methacrylate-polymethyl methacrylate block copolymer, a polymethyl methacrylate-poly-2-ehtylhexyl methacrylate-polymethyl methacrylate block copolymer, a polymethyl methacrylate-polylauryl methacrylate-polymethyl methacrylate block copolymer and an ethylene-methyl acrylate block copolymer.

The styrene thermoplastic elastomer includes, for example, a copolymer of a styrene (a monomer having a styrene skeleton) and an olefin, a copolymer of a styrene and a conjugated diene and a copolymer of a styrene, a conjugated diene and an olefin. Specifically, it includes, for example, a polystyrene-polybutadiene-polystyrene block copolymer, a polystyrene-polybutadiene-polybutylene-polystyrene block copolymer, a polystyrene-polyethylene-polybutylene-polystyrene block copolymer, a polystyrene-polyisoprene-polystyrene block copolymer, a polystyrene-hydrogenated polybutadiene-polystyrene block copolymer, a polystyrene-hydrogenated polyisoprene-polystyrene block copolymer and a polystyrene-polyisoprene-hydrogenated butadiene-polystyrene block copolymer.

The thermoplastic elastomer compound (E) also includes a polymer with a core shell structure having a core layer and a shell layer on a surface of the core layer. In the polymer with a core shell structure, between the core layer and the shell layer, other shell layer than one layer may be present.

The polymer with a core shell structure is a polymer having the core layer as the innermost layer and the shell layer as the outermost layer (specifically, a polymer in which with a polymer for forming the core layer is graft-polymerized other polymer to form the shell layer).

In addition, between the core layer and the shell layer, one or more other layers (for example, one or more and 6 or less other layers) may be present. In the case wherein the other layers are present, the polymer with a core shell structure is a polymer in which with a polymer for forming the core layer are graft-polymerized plural kinds of polymers to form multilayers.

The core layer is preferably a rubber layer. The rubber layer includes a layer, for example, of a polymer rubber, for example, (meth)acryl rubber, silicone rubber, styrene rubber, conjugated diene rubber, α-olefin rubber, nitrile rubber, urethane rubber, polyester rubber or polyamide rubber, and of a copolymer rubber of two or more kinds of these rubber.

Among these, the rubber layer is preferably a layer, for example, of a polymer rubber, for example, (meth)acryl rubber, silicone rubber, styrene rubber, conjugated diene rubber or α-olefin rubber, or of a copolymer rubber of two or more kinds of these rubber.

In addition, the rubber layer may be a rubber layer crosslinked by copolymerization with a crosslinking agent (for example, divinylbenzene, allyl acrylate or butylene glycol diacrylate).

The (meth)acryl rubber includes, for example, a polymer rubber obtained by polymerizing a (meth)acrylic component (for example, an alkyl (having 2 or more and 6 or less carbon atoms) ester of (meth)acrylic acid).

The silicone rubber includes, for example, rubber constructed by a silicone component (for example, polydimethylsiloxane or polyphenylsiloxane).

The styrene rubber includes, for example, a polymer rubber obtained by polymerizing a styrene component (for example, styrene or α-styrene).

The conjugated diene rubber includes, for example, a polymer rubber obtained by polymerizing a conjugated diene component (for example, butadiene or isoprene).

The α-olefin rubber includes, for example, a polymer rubber obtained by polymerizing an α-olefin component (for example, ethylene, propylene or 2-methylpropylene).

The copolymer rubber includes, for example, a copolymer rubber obtained by polymerizing two or more kinds of (meth)acrylic components, a copolymer rubber obtained by polymerizing a (meth)acrylic component and a silicone component and a copolymer rubber obtained by polymerizing a (meth)acrylic component, a conjugated diene component and a styrene component.

The shell layer includes, for example, a layer containing at least one polymer selected from a glycidyl group-containing vinyl compound, a (meth)acrylic acid alkyl ester, an unsaturated dicarboxylic acid anhydride, an aliphatic vinyl compound, an aromatic vinyl compound, a vinyl cyanide compound, a maleimide compound and (meth)acrylic acid. In the polymer constituting the shell layer, vinyl compounds other than those described above may be polymerized.

Among these, the shell layer is preferably a layer containing a polymer obtained by polymerizing at least one selected from a glycidyl group-containing vinyl compound, a (meth)acrylic acid alkyl ester and an unsaturated dicarboxylic acid anhydride.

The glycidyl group-containing vinyl compound includes, for example, glycidyl (meth)acrylate, glycidyl itaconate, diglycidyl itaconate, allyl glycidyl ether, styrene-4-glycidyl ether and 4-glycidylstyrene.

The (meth)acrylic acid alkyl ester includes, for example, methyl (meth)acrylate, ethyl (meth)acrylate, n-propyl (meth)acrylate, n-butyl (meth)acrylate, tert-butyl (meth)acrylate, n-hexyl (meth)acrylate, 2-ethylhexyl (meth)acrylate, cyclohexyl (meth)acrylate, stearyl (meth)acrylate and octadecyl (meth)acrylate. In the (meth)acrylic acid alkyl ester, at least a part of hydrogen atoms of the alkyl chain may be substituted. The substituent includes, for example, an amino group, a hydroxy group and a halogen group.

The unsaturated dicarboxylic acid anhydride includes, for example, maleic anhydride, itaconic anhydride, glutaconic anhydride, citraconic anhydride and aconic anhydride. Among these, maleic anhydride is preferred.

One or more other layers present between the core layer and the shell layer includes the layer of polymer described in the shell layer.

The average primary particle diameter of the polymer with a core shell structure is not particularly limited, and is preferably 50 nm or more and 500 nm or less, more preferably 50 nm or more and 400 nm or less, particularly preferably 100 nm or more and 300 nm or less, and most preferably 150 nm or more and 250 nm or less from the standpoint of suppressing the decrease in transparency and increasing the impact resistance of the resin molded article obtained.

In addition, the average primary particle diameter is a value determined by the following method. The particles are observed by a scanning electron microscope taking the maximum diameter of the primary particle as the primary particle diameter, the primary particle diameters of 100 particles are measured and averaged to determine a number average primary particle diameter. Specifically, it is determined by observing the dispersion state of the polymer with a core shell structure in the resin composition by a scanning electron microscope.

The polymer with a core shell structure can be produced by a known method.

The known method includes an emulsion polymerization method. The production method specifically includes the following method. First, a mixture of a monomer is subjected to emulsion polymerization to form a core particle (core layer) and then a mixture of other monomer different from the monomer used for forming the core particle is subjected to emulsion polymerization in the presence of the core particle (core layer) to from a shell layer around the core particle (core layer), thereby producing a polymer with a core shell structure.

Further, in the case of forming other layer between the core layer and the shell layer, the emulsion polymerization of a mixture of other monomer is repeated to obtain a polymer with a core shell structure constructed with the desired core layer, other layer and shell layer.

A commercially available product of the polymer with a core shell structure includes, for example, "Metablen" (registered trademark) manufactured by Mitsubishi Chemical Corp., "Kane Ace" (registered trademark) manufactured by Kaneka Corp., "Paraloid" (registered trademark) manufactured by Rohm & Haas Co., "Stafiloid" (registered trademark) manufactured by Aica Kogyo Co., Ltd., and "Paraface" (registered trademark) manufactured by Kuraray Co., Ltd.

Of the thermoplastic elastomer compounds (E) described above, a (meth)acrylic thermoplastic elastomer is preferred from the standpoint of suppressing the decrease in transparency and increasing the impact resistance of the resin molded article obtained. The (meth)acrylic thermoplastic elastomer also includes the polymer with a core shell structure described above.

The (meth)acrylic thermoplastic elastomer is suitably an elastomer having 50% by mass or more of the constituting unit derived from a (meth)acrylic acid alkyl ester with respect to the total constituting units.

The content of the thermoplastic elastomer compound (E) is preferably 1% by mass or more and 20% by mass or less, and more preferably 5% by mass or more and 10% by mass or less.

### (Other components excepting thermoplastic elastomer compound (E))

The resin composition according to the exemplary embodiment may further contain other components excepting the components described above. Other components include, for example, a flame retardant, a compatibilizer, an antioxidant, a release agent, a light resistant agent, a weather resistant agent, a colorant, a pigment, a modifier, a drip preventing agent, an antistatic agent, a hydrolysis inhibitor, a filler, and a reinforcing agent (glass fiber, carbon fiber, talc, clay, mica, glass flake, milled glass, glass bead, crystalline silica, alumina, silicon nitride, aluminum nitride, boron nitride and the like).

Further, if desired, a component (additive), for example, an acid acceptor for preventing acetic acid release or a reactive trapping agent may be added. The acid acceptor includes, for example, an oxide, for example, magnesium oxide or aluminum oxide; a metal hydroxide, for example, magnesium hydroxide, calcium hydroxide, aluminum hydroxide or hydrotalcite; calcium carbonate; and talc.

The reactive trapping agent include, for example, an epoxy compound, an acid anhydride compound and a carbodiimide.

The content of the respective components is preferably 0% by mass or more and 5% by mass or less with respect to the total amount of the resin composition. Here, the expression "0% by mass" means that other components are not included.

The resin composition according to the exemplary embodiment may contain other resins than the resins described above (the cellulose ester compound (A), the poly(meth)acrylate compound (B), the polyester resin (C) and the thermoplastic elastomer compound (E)). However, in the case of containing other resins, the content of the other resins with respect to the total amount of the resin composition is suitably 5% by mass or less, and preferably less than 1% by mass. It is more preferred that other resins are not contained (that is, 0% by mass).

Other resins include, for example, conventionally known thermoplastic resins, and specifically include, for example, a polycarbonate resin; a polypropylene resin; a polyester resin; a polyolefin resin; a polyester carbonate resin; a polyphenylene ether resin; a polyphenylene sulfide resin; a polysulfone resin; a polyether sulfone resin; a polyarylene resin; a polyetherimide resin; a polyacetal resin; a polyvinyl acetal resin; a polyketone resin; a polyetherketone resin; a polyetheretherketone resin; a polyarylketone resin; a polyethernitrile resin; a liquid crystal resin; a polybenzimidazole resin; a polyparabanic acid resin; a vinyl polymer or a vinyl copolymer obtained by polymerizing or copolymerizing one or more vinyl monomers selected from the group consisting of an aromatic alkenyl compound, a methacrylic acid ester, an acrylic acid ester and a vinyl cyanide compound; a diene-aromatic alkenyl compound copolymer; a vinyl cyanide-diene-aromatic alkenyl compound copolymer; an aromatic alkenyl compound-diene-vinyl cyanide-N-phenylmaleimide copolymer; a vinyl cyanide-(ethylene-diene-propylene (EPDM))-aromatic alkenyl compound copolymer; a vinyl chloride resin; and a chlorinated vinyl chloride resin. These resins may be used one kind alone or may be used two or more kinds in combination.

### [Method of producing resin composition]

The resin composition according to the exemplary embodiment includes, for example, a step of preparing a resin composition containing the cellulose ester compound (A), the poly(meth)acrylate compound (B), the polyester resin (C) and the ester compound (D) having a molecular weight of 250 or more and 800 or less.

The resin composition according to the exemplary embodiment is produced by melting and kneading a mixture containing the cellulose ester compound (A), the poly(meth)acrylate compound (B), the polyester resin (C) and the ester compound (D) having a molecular weight of 250 or more and 800 or less, and, if desired, other components and the like. In addition, the resin composition according to the exemplary embodiment is produced, for example, by dissolving the components described above in a solvent.

A melting and kneading means includes known means and specifically includes, for example, a twin screw extruder, a Henschel mixer, a Banbury mixer, a single screw extruder, a multi-screw extruder and a co-kneader.

### <Resin molded article>

The resin molded article according to the exemplary embodiment contains the resin composition according to the exemplary embodiment. That is, the resin molded article according to the exemplary embodiment is composed of the same composition as the resin composition according to the exemplary embodiment.

As the method of molding the resin molded article according to the exemplary embodiment, injection molding is preferred from the standpoint of high degree of freedom in shape. From this point of view, the resin molded article is preferably a resin molded article obtained by injection molding.

The cylinder temperature of the injection molding is, for example, 160°C or more and 280°C or less, and preferably 180°C or more and 260°C or less. The mold temperature of the injection molding is, for example, 40°C or more and 90°C or less, and more preferably 60°C or more and 80°C or less.

The injection molding may be performed, for example, by using a commercially available apparatus, for example, NEX500 manufactured by Nissei Plastic Industrial Co., Ltd., NEX150 manufactured by Nissei Plastic Industrial Co., Ltd., NEX70000 manufactured by Nissei Plastic Industrial Co., Ltd., PNX40 manufactured by Nissei Plastic Industrial Co., Ltd. and SE50D manufactured by Sumitomo Heavy Industries, Ltd.

The molding method for obtaining the resin molded article according to the exemplary embodiment is not limited to the injection molding described above and, for example, extrusion molding, blow molding, heat press molding, calendaring molding, coating molding, cast molding, dipping molding, vacuum molding and transfer molding may be applied.

In the resin molded article according to the exemplary embodiment, when the resin molded article has a thickness of 2 mm, a Haze value is suitably 10% or less (preferably 7% or less). When the haze value of the resin molded article in case of having a thickness of 2 mm is 10% or less, it is said that the resin molded article has transparency.

In addition, although the ideal value of the Haze value of the resin molded article is 0%, the Haze value is suitably 0.5% or more from the standpoint of production.

The Haze value of the resin molded article is a value measured by the method shown in the examples.

The resin molded article according to the exemplary embodiment is preferably used for the purposes of electric and electronic apparatuses, business apparatuses, home appliances, automobile interior materials, toys, containers and the like. More specifically, the resin molded article is used in housings of electric and electronic apparatuses or home appliances; various components of electric and electronic apparatuses or home appliances; interior components of automobiles; building block toys; plastic model kits; storage cases of CD-ROM, DVD and the like; tableware; drink bottles; food trays; wrapping materials; films; sheets and the like.

### EXAMPLES

The invention will be described more specifically with reference to the examples, but the invention should not be construed as being limited the examples. In addition, unless otherwise noted, "part" refers to "part by weight".

### <Preparation of each material>

The following materials were prepared.

### (Preparation of Cellulose ester compound (A))

CE1: CAP-482-20 (Eastman Chemical Co.)
CE2: CAB-171-15 (Eastman Chemical Co.)
CE3: CAB-381-20 (Eastman Chemical Co.)
CE4: L-50 (Daicel Corp.), DAC

The characteristics of the cellulose ester compound (A) are shown as a list in Table 1. In Table 1, DPw shows the weight average polymerization degree. Further, DS(Ac), DS(Pr) and DS(Bt) show the substitution degree of acetyl group, the substitution degree of propionyl group and the substitution degree of butyryl group, respectively.

**[Table 1]**

| Cellulose Ester Compound (A) | DPw | DS(Ac) | DS(Pr) | DS(Bt) |
|---|---|---|---|---|
| CE1 | 716 | 0.18 | 2.49 | - |
| CE2 | 754 | 2.07 | - | 0.73 |
| CE3 | 890 | 1.05 | - | 1.74 |
| CE4 | 570 | 2.45 | - | - |

### (Preparation of Poly(meth)acrylate Compound (B))

B1: Delpet 720V (Asahi Kasei Chemicals Corp.), polymethyl methacrylate (PMMA), Mw = 55,000
B2: Acrypet VH (Mitsubishi Chemical Corp.), polymethyl methacrylate (PMMA), Mw = 89,000
B3: Delpet 980n (Asahi Kasei Chemicals Corp.), single copolymer of methyl methacrylate (MMA), styrene (St) and maleic anhydride (MAH) (mass ratio = MMA:St:MAH = 67:14:19), Mw = 110,000
B4: TX-100S (Denka Co., Ltd.), single copolymer of methyl methacrylate (MMA) and styrene (St) (mass ratio = MMA:St = 61:39), Mw = 105,000
B5: Single copolymer of methyl methacrylate (MMA) and styrene (St) (mass ratio = MMA:St = 30:70), Mw = 77,000
B6: Single copolymer of methyl acrylate (MA) and styrene (St) (mass ratio = MA:St = 65:35), Mw = 72,000
B7: Delpowder 500V (Asahi Kasei Chemicals Corp.), polymethyl methacrylate (PMMA), MW in terms of PS = 25,000
B8: Polyethyl methacrylate, MW = 55,000

### (Preparation of Polyester resin (C))

C1: Ingeo Biopolymer3001D (NatureWorks LLC), polylactic acid (PLA)
C2: Aonilex X151A (Kaneka Corp.), copolymer of 3-hydroxybutyric acid (3-hydroxybutyrate) and 3-hydroxyhexanoic acid (3-hydroxyhexanoate) (PHBH)
C3: Lacea H-100 (Mitsui Chemicals, Inc.) polylactic acid (PLA)
C4: Aonilex X131A (Kaneka Corp.), copolymer of 3-hydroxybutyric acid (3-hydroxybutyrate) and 3-hydroxyhexanoic acid (3-hydroxyhexanoate) (PHBH)

### (Preparation of Ester compound (D))

D1: Daifatty 101 (Daihachi Chemical Industry Co., Ltd.), adipic acid ester-containing compound, molecular weight of adipic acid ester = range of 326 or more and 378 or less
D2: DOA (Mitsubishi Chemical Corp.), dioctyl adipate, molecular weight = 371
D3: D610A (Mitsubishi Chemical Corp.), adipic acid di-n-alkyl (number of carbon atoms: 6, 78, 10) ester mixture (R-OOC(CH₂)₄COO-R, R = n-C₆H₁₃, n-C₈H₁₇ and n-C₁₀H₂₁), molecular weight = range of 314 or more and 427 or less
D4: HA-5 (Kao Corp), adipic acid polyester, molecular weight = 750
D5: CITROFOL AI (Jungbunzlauer AG), triethyl citrate, molecular weight = 276
D6: CITROFOL All (Jungbunzlauer AG), acetyl triethyl citrate, molecular weight = 318
D7: CITROFOL BII (Jungbunzlauer AG), acetyl tributyl citrate, molecular weight = 402
D8: CITROFOL AHII (Jungbunzlauer AG), acetyl 2-ethylhexyl citrate, molecular weight = 571
D9: DOZ (Daihachi Chemical Industry Co., Ltd.), bis(2-ethylhexyl) azelate, molecular weight = 413
D10: DBS (Daihachi Chemical Industry Co., Ltd.), dibutyl sebacate, molecular weight = 314
D11: DOS (Daihachi Chemical Industry Co., Ltd.), bis(2-ethylhexyl) sebacate, molecular weight = 427
D12: D620 (Mitsubishi Chemical Corp.), adipic acid polyester, molecular weight = about 800
D13: D621 (Mitsubishi Chemical Corp.), adipic acid polyester, molecular weight = about 1,200
D14: D633 (Mitsubishi Chemical Corp.), adipic acid polyester, molecular weight = about 1,800
D15: Benzoic acid glycol ester (Mitsubishi Chemical Corp.), benzoic acid glycol ester, molecular weight = 327
D16: DOTP (Mitsubishi Chemical Corp.), bis(2-ethylhexyl) terephthalate, molecular weight = 391

### (Thermoplastic elastomer compound (E))

E1: Metablen W-600A (Mitsubishi Chemical Corp.), polymer with a core shell structure (polymer obtained by graft polymerization of a single polymer rubber of methyl methacrylate and 2-ethylhexyl acrylate to a copolymer rubber of 2-ethylhexyl acrylate and n-butyl acrylate for forming a core layer, thereby forming a shell layer), average primary particle diameter = 200 nm
E2: Metablen C-223A (Mitsubishi Chemical Corp.), polymer with a core shell structure (polymer (MSB) obtained by graft polymerization of a copolymer of methyl methacrylate and styrene to a homopolymer rubber of butadiene for forming a core layer, thereby forming a shell layer), average primary particle diameter = 300 nm
E3: Metablen S-2006 (Mitsubishi Chemical Corp.), polymer with a core shell structure (polymer composed of silicone acryl rubber as a core layer and polymer of methyl methacrylate as a shell layer), average primary particle diameter = 200 nm
E4: Lotryl 29MA03 (Arkema S.A.), block copolymer of ethylene and methyl acrylate
E5: JSR TR 2500 (JSR Corp.), block copolymer of styrene, butadiene and styrene (SBS)
E6: AR-SC-0 (Aronkasei Co., Ltd.), block copolymer of styrene, ethylene, butylene and styrene (hydrogenated SEBS)
E7: Paraloid EXL-2314 (Dow Chemical Co.), polymer with a core shell structure (polymer obtained by graft polymerization of a copolymer of methyl methacrylate and glycidyl methacrylate to rubber containing polybutyl acrylate as a main component for forming a core layer, thereby forming a shell layer), having reactive group

### <Examples 1 to 43 and Comparative Examples 1 to 10>

### (Kneading and injection molding)

Kneading was performed by a twin screw kneading apparatus (LTE20-44 manufactured by Labtech Engineering Co., Ltd.) in the charging composition ratio shown in Table 2 to Table 6 and at the cylinder temperature shown in Table 2 to Table 6 to obtain a resin composition (pellet).

Resin molded articles (1) to (4) shown below were molded from the pellets obtained by using an injection molding machine (NEX500I manufactured by Nissei Plastic Industrial Co., Ltd.) at the cylinder temperature and the mold temperature shown in Table 2 to Table 6 and at which the injection peak pressure did not exceed 180 MPa.
(1): D2 test piece (size: 60 mm x 60 mm, thickness of 2 mm) was molded.
(2): ISO multi-purpose dumbbell test piece (width of measurement part of 10 mm x thickness of 4 mm) was molded.
(3): Square flat plate (size: 60 mm x 60 mm, thickness of 2 mm)
(4): D12 small square plate (size: 60 mm x 60 mm, thickness of 2 mm)
(5): Weld dumbbell test piece which was a test piece which had the same shape as ISO multi-purpose dumbbell test piece and was molded by providing gates on the both ends in the length direction and had a weld in the central portion in the length direction (width of measurement part of 10 mm x thickness of 4 mm)

### <Evaluation>

As to the molded articles obtained, the evaluations shown below were performed. The evaluation results are shown in Table 2 to Table 6.

### (Maximum tensile stress, tensile elongation at break and tensile elastic modulus)

As to each of the ISO multi-purpose dumbbell test pieces obtained, the maximum tensile stress, tensile elongation at break and tensile elastic modulus were measured using a universal tester (AUTOGRAPH AG-Xplus manufactured by Shimadzu Corp.) by the method in accordance with ISO 527.

### (Charpy impact strength)

The ISO multi-purpose dumbbell test piece obtained was subjected to notching using a notching apparatus (Notching Tool manufactured by Toyo Seiki Seisaku-sho, Ltd.). As to the ISO multi-purpose dumbbell test piece subjected to the notching, the Charpy impact strength was measured with a digital impact resistance measurement apparatus (DG-UB Model manufactured by Toyo Seiki Seisaku-sho, Ltd.) using a 2J hammer by the method in accordance with ISO-179-1 (2010).

Further, the state of the ISO multi-purpose dumbbell test piece after the measurement of Charpy impact strength was evaluated according to the criteria shown below. break: the test piece is destructed into two or more pieces.
not break: incomplete destruction to form a test piece which is integrally connected with a hinge-shaped layer and not separated.

### (Weld Charpy impact strength)

The weld dumbbell test piece (width of measurement part of 10 mm x thickness of 4 mm) was subjected to notching, and as to the test piece, the impact resistance was measured by Charpy impact test with an evaluation apparatus (DG-UB Model manufactured by Toyo Seiki Seisaku-sho, Ltd.) using a 2J hammer by the method in accordance with ISO-179-1 (2010).

### (Transparency (total light transmittance))

As to D2 test piece obtained, the total light transmittance at a wave length of 530 nm was measured using a spectral haze meter (SH 7000 manufactured by Nippon Denshoku Industries Co., Ltd.)

### (Haze value)

As to the D12 small square plate, the haze value was measured using a haze meter (NDH 200 manufactured by Nippon Denshoku Industries Co., Ltd.)

**[Table 2]**

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| Charging Composition Ratio | Cellulose Ester Compound (A) | Kind | CE1 | CE1 | CE1 | CE1 | CE1 | CE1 | CE1 | CE1 | CE2 | CE3 |
| | | Parts by Mass | 88 | 88 | 88 | 88 | 88 | 88 | 88 | 88 | 88 | 88 |
| | Poly(meth)acrylate Compound (B) | Kind | B1 | B1 | B1 | B1 | B1 | B1 | B1 | B1 | B1 | B1 |
| | | Parts by Mass | 5 | 5 | 5 | 1 | 10 | 40 | 5 | 5 | 5 | 5 |
| | Polyester Resin (C) | Kind | C1 | C1 | C1 | C1 | C1 | C1 | C1 | C1 | C1 | C1 |
| | | Parts by Mass | 5 | 5 | 5 | 5 | 5 | 5 | 5 | 5 | 5 | 5 |
| | Ester Compound (D) | Kind | D1 | D2 | D3 | D4 | D5 | D6 | D7 | D8 | D1 | D1 |
| | | Parts by Mass | 12 | 12 | 12 | 12 | 12 | 12 | 12 | 12 | 12 | 12 |
| | | (D)/(A) x 100 | 13.6 | 13.6 | 13.6 | 13.6 | 13.6 | 13.6 | 13.6 | 13.6 | 13.6 | 13.6 |
| | Thermoplastic Elastomer (E) | Kind | El | El | El | El | El | El | El | El | El | El |
| | | Parts by Mass | 10 | 10 | 10 | 10 | 10 | 10 | 10 | 10 | 10 | 10 |
| Kneading | Cylinder Temperature | °C | 200 | 200 | 200 | 200 | 200 | 200 | 200 | 200 | 200 | 200 |
| Molding | Cylinder Temperature | °C | 200 | 200 | 200 | 200 | 200 | 200 | 200 | 200 | 200 | 200 |
| | Mold Temperature | °C | 40 | 40 | 40 | 40 | 40 | 40 | 40 | 40 | 40 | 40 |
| Mechanical Strength | Maximum Tensile Stress | MPa | 43 | 41 | 42 | 39 | 37 | 38 | 38 | 38 | 52 | 42 |
| | Tensile Elongation at Break | % | 42 | 41 | 43 | 46 | 41 | 39 | 42 | 41 | 12.7 | 37 |
| | Tensile Elastic Modulus | MPa | 1759 | 1721 | 1740 | 1692 | 1709 | 1787 | 1654 | 1670 | 2097 | 1612 |
| | Charpy Impact Strength | KJ/m² | 22.7 | 20.9 | 20.7 | 21.4 | 20.6 | 21.3 | 20.1 | 19.7 | 9.8 | 23.2 |
| | break or not break | | not break | not break | not break | not break | not break | not break | not break | not break | not break | not break |
| | Weld Charpy Impact Strength | KJ/m² | 18.5 | 17.6 | 17.9 | 17.3 | 18.1 | 17.8 | 17.7 | 18.2 | 8.6 | 19.7 |
| Transparency (Total Light Transmittance) | | % | 86 | 85 | 87 | 84 | 83 | 80 | 82 | 80.0 | 84 | 85 |
| Haze Value | | % | 5.7 | 5.8 | 5.9 | 6.2 | 6.3 | 6.1 | 6.7 | 6.0 | 5.7 | 5.8 |

**[Table 3]**

| | | | Example 11 | Example 12 | Example 13 | Example 14 | Example 15 | Example 16 | Example 17 | Example 18 | Example 19 | Example 20 |
|---|---|---|---|---|---|---|---|---|---|---|---|---|
| Charging Composition Ratio | Cellulose Ester Compound (A) | Kind | CE4 | CE1 | CE1 | CE1 | CE1 | CE1 | CE1 | CE1 | CE2 | CE3 |
| | | Parts by Mass | 88 | 88 | 88 | 88 | 88 | 88 | 88 | 88 | 88 | 88 |
| | Poly(meth)acrylate Compound (B) | Kind | B1 | B2 | B3 | B4 | B5 | B6 | B7 | B8 | B1 | B1 |
| | | Parts by Mass | 5 | 5 | 5 | 5 | 10 | 5 | 5 | 5 | 5 | 5 |
| | Polyester Resin (C) | Kind | C1 | C1 | C1 | C1 | C1 | C1 | C1 | C1 | C2 | C3 |
| | | Parts by Mass | 5 | 1 | 10 | 40 | 10 | 5 | 5 | 5 | 5 | 5 |
| | Ester Compound (D) | Kind | D1 | D1 | D1 | D1 | D1 | D1 | D1 | D1 | D2 | D3 |
| | | Parts by Mass | 12 | 12 | 12 | 12 | 12 | 12 | 12 | 12 | 12 | 12 |
| | | (D)/(A) x 100 | 13.6 | 13.6 | 13.6 | 13.6 | 13.6 | 13.6 | 13.6 | 13.6 | 13.6 | 13.6 |
| | Thermoplastic Elastomer (E) | Kind | El | El | El | El | El | El | El | El | El | El |
| | | Parts by Mass | 10 | 10 | 10 | 10 | 10 | 10 | 10 | 10 | 10 | 10 |
| Kneading | Cylinder Temperature | °C | 220 | 200 | 200 | 200 | 200 | 200 | 200 | 200 | 200 | 200 |
| Molding | Cylinder Temperature | °C | 220 | 200 | 200 | 200 | 200 | 200 | 200 | 200 | 200 | 200 |
| | Mold Temperature | °C | 60 | 40 | 40 | 40 | 40 | 40 | 40 | 40 | 40 | 40 |
| Mechanical Strength | Maximum Tensile Stress | MPa | 62 | 40 | 42 | 46 | 45 | 42 | 43 | 43 | 41 | 42 |
| | Tensile Elongation at Break | % | 14.9 | 41 | 40 | 38 | 36 | 42 | 41 | 42 | 40 | 41 |
| | Tensile Elastic Modulus | MPa | 2954 | 1764 | 1790 | 1789 | 1803 | 1780 | 1745 | 1710 | 1724 | 1747 |
| | Charpy Impact Strength | KJ/m² | 13.4 | 22.1 | 21.6 | 20.1 | 20.3 | 21.7 | 28.6 | 22.4 | 21.6 | 20.9 |
| | break or not break | | not break | not break | not break | not break | not break | not break | not break | notbreak | not break | not break |
| | Weld Charpy Impact Strength | KJ/m² | 11.3 | 19.0 | 19.1 | 18.4 | 18.3 | 17.9 | 23.5 | 18.7 | 18.1 | 18.3 |
| Transparency (Total Light Transmittance) | | % | 84 | 86 | 82 | 87 | 84 | 85 | 92 | 86 | 87 | 81 |
| Haze Value | | % | 5.4 | 5.6 | 6.1 | 5.3 | 5.4 | 5.9 | 4.3 | 5.4 | 5.4 | 6.3 |

**[Table 4]**

| | | | Example 21 | Example 22 | Example 23 | Example 24 | Example 25 | Example 26 | Example 27 | Example 28 | Example 29 | Example 30 |
|---|---|---|---|---|---|---|---|---|---|---|---|---|
| Charging Composition Ratio | Cellulose Ester Compound (A) | Kind | CE1 | CE1 | CE1 | CE1 | CE1 | CE1 | CE1 | CE1 | CE1 | CE1 |
| | | Parts by Mass | 88 | 88 | 88 | 88 | 88 | 88 | 88 | 88 | 88 | 88 |
| | Poly(meth)acrylate Compound (B) | Kind | B1 | B1 | B1 | B1 | B1 | B1 | B1 | B1 | B1 | B1 |
| | | Parts by Mass | 5 | 5 | 5 | 5 | 5 | 5 | 5 | 5 | 5 | 5 |
| | Polyester Resin (C) | Kind | C4 | C1 | C1 | C1 | C1 | C1 | C1 | C1 | C1 | C1 |
| | | Parts by Mass | 5 | 5 | 5 | 5 | 5 | 5 | 5 | 5 | 5 | 5 |
| | Ester Compound (D) | Kind | D1 | D1 | D1 | D1 | D1 | D1 | D1 | D9 | D10 | D11 |
| | | Parts by Mass | 12 | 12 | 12 | 12 | 12 | 12 | 12 | 12 | 12 | 12 |
| | | (D)/(A) x 100 | 13.6 | 13.6 | 13.6 | 13.6 | 13.6 | 13.6 | 13.6 | 13.6 | 13.6 | 13.6 |
| | Thermoplastic Elastomer (E) | Kind | El | E2 | E3 | E4 | E5 | E6 | E7 | El | El | El |
| | | Parts by Mass | 10 | 10 | 10 | 10 | 10 | 10 | 10 | 5 | 25 | 10 |
| Kneading | Cylinder Temperature | °C | 200 | 200 | 200 | 200 | 200 | 200 | 200 | 200 | 200 | 200 |
| Molding | Cylinder Temperature | °C | 200 | 200 | 200 | 200 | 200 | 200 | 200 | 200 | 200 | 200 |
| | Mold Temperature | °C | 40 | 40 | 40 | 40 | 40 | 40 | 40 | 40 | 40 | 40 |
| Mechanical Strength | Maximum Tensile Stress | MPa | 42 | 44 | 43 | 42 | 42 | 43 | 41 | 41 | 40 | 42 |
| | Tensile Elongation at Break | % | 41 | 42 | 39 | 42 | 41 | 41 | 40 | 40 | 37 | 41 |
| | Tensile Elastic Modulus | MPa | 1713 | 1768 | 1712 | 1756 | 1744 | 1763 | 1789 | 1747 | 1687 | 1798 |
| | Charpy Impact Strength | KJ/m² | 21.8 | 20.9 | 23.4 | 19.7 | 20.6 | 21.4 | 20.7 | 21.5 | 21.7 | 21.6 |
| | break or not break | | not break | not break | not break | not break | not break | not break | not break | not break | not break | not break |
| | Weld Charpy Impact Strength | KJ/m² | 18.4 | 18.2 | 19.4 | 17.2 | 17.6 | 18.8 | 17.1 | 18.7 | 18.8 | 18.8 |
| Transparency (Total Light Transmittance) | | % | 87 | 85 | 86 | 87 | 82 | 86 | 85 | 87 | 81 | 82 |
| Haze Value | | % | 5.3 | 5.9 | 5.4 | 5.3 | 6.1 | 5.3 | 5.8 | 5.3 | 6.4 | 5.9 |

**[Table 5]**

| | | | Example 31 | Example 32 | Example 33 | Example 34 | Example 35 | Example 36 | Example 37 | Example 38 | Example 39 | Example 40 | Example 41 | Example 42 | Example 43 |
|---|---|---|---|---|---|---|---|---|---|---|---|---|---|---|---|
| Charging Composition Ratio | Cellulose Ester Compound (A) | Kind | CE1 | CE1 | CE1 | CE1 | CE1 | CE1 | CE1 | CE1 | CE1 | CE1 | CE1 | CE1 | CE1 |
| | | Parts by Mass | 88 | 88 | 88 | 88 | 88 | 88 | 99 | 95 | 90 | 85 | 80 | 70 | 60 |
| | Poly(meth)acrylate Compound (B) | Kind | B1 | B1 | B1 | B1 | B1 | B1 | B1 | B1 | B1 | B1 | B1 | B1 | B1 |
| | | Parts by Mass | 5 | 5 | 5 | 5 | 5 | 5 | 5 | 5 | 5 | 5 | 5 | 5 | 5 |
| | Polyester Resin (C) | Kind | C1 | C1 | C1 | C1 | C1 | C1 | C1 | C1 | C1 | C1 | C1 | C1 | C1 |
| | | Parts by Mass | 5 | 5 | 5 | 5 | 5 | 5 | 5 | 5 | 5 | 5 | 5 | 5 | 5 |
| | Ester Compound (D) | Kind | D12 | D13 | D14 | D15 | D16 | D1 | D1 | D1 | D1 | D1 | D1 | D1 | D1 |
| | | Parts by Mass | 12 | 12 | 12 | 12 | 12 | 12 | 1 | 5 | 10 | 15 | 20 | 30 | 40 |
| | | (D)/(A) x 100 | 13.6 | 13.6 | 13.6 | 13.6 | 13.6 | 13.6 | 1.0 | 5.3 | 11.1 | 17.6 | 25.0 | 42.9 | 66.7 |
| | Thermoplastic Elastomer (E) | Kind | El | El | El | El | El | - | El | El | El | El | El | - | El |
| | | Parts by Mass | 10 | 10 | 10 | 10 | 10 | - | 10 | 10 | 10 | 10 | 10 | - | 10 |
| Kneading | Cylinder Temperature | °C | 200 | 200 | 210 | 200 | 200 | 200 | 220 | 210 | 200 | 200 | 180 | 170 | 160 |
| Molding | Cylinder Temperature | °C | 200 | 200 | 210 | 200 | 200 | 200 | 220 | 210 | 200 | 200 | 180 | 170 | 160 |
| | Mold Temperature | °C | 40 | 40 | 40 | 40 | 40 | 40 | 60 | 40 | 40 | 40 | 40 | 40 | 30 |
| Mechanical Strength | Maximum Tensile Stress | MPa | 44 | 44 | 45 | 41 | 42 | 43 | 57 | 53 | 49 | 37 | 33 | 27 | 20 |
| | Tensile Elongation at Break | % | 43 | 43 | 43 | 41 | 41 | 37 | 31 | 35 | 39 | 49 | 55 | 62 | 74 |
| | Tensile Elastic Modulus | MPa | 1708 | 1763 | 1784 | 1772 | 1743 | 1754 | 2079 | 1976 | 1784 | 1613 | 1354 | 1179 | 986 |
| | Charpy Impact Strength | KJ/m² KJ/m² | 20.6 | 20.7 | 21.8 | 22.4 | 22.0 | 19.8 | 18.3 | 18.6 | 19.4 | 24.9 | 29.1 | 35.3 | 41.4 |
| | break or not break | | not break | not break | not break | not break | not break | not break | not break | not break | not break | not break | not break | not break | not break |
| | Weld Charpy Impact Strength | KJ/m² | 17.7 | 17.4 | 19.4 | 19.5 | 19.2 | 17.3 | 16.9 | 16.7 | 17.1 | 19.7 | 24.1 | 31.3 | 37.6 |
| Transparency (Total Light Transmittance) | | % | 86 | 87 | 86 | 85 | 85 | 87 | 87 | 86 | 85 | 85 | 83 | 82 | 80 |
| Haze Value | | % | 5.4 | 5.3 | 5.9 | 5.9 | 5.3 | 5.3 | 5.5 | 5.4 | 5.3 | 5.5 | 5.9 | 6.1 | 6.8 |

**[Table 6]**

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|---|
| Charging Composition Ratio | Cellulose Ester Compound (A) | Kind | CE1 | CE1 | CE1 | CE1 | CE1 | CE1 | CE1 | CE1 | CE1 | CE1 |
| | | Parts by Mass | 88 | 88 | 88 | 88 | 88 | 88 | 88 | 88 | 88 | 88 |
| | Poly(meth)acrylate Compound (B) | Kind | - | B1 | - | B1 | B1 | B1 | B1 | B1 | B1 | B1 |
| | | Parts by Mass | - | 5 | - | 5 | 5 | 5 | 5 | 5 | 5 | 5 |
| | Polyester Resin (C) | Kind | - | - | C1 | C1 | C1 | C1 | C1 | C1 | C1 | C1 |
| | | Parts by Mass | - | - | 5 | 5 | 5 | 5 | 5 | 5 | 5 | 5 |
| | Ester Compound (D) | Kind | D1 | D1 | D1 | - | - | PEG | DPER | BPEF | D17 | PKA-5003 |
| | | Parts by Mass | 12 | 12 | 12 | - | - | 12 | 12 | 12 | 12 | 12 |
| | Thermoplastic Elastomer (E) | Kind | - | - | - | - | El | El | El | El | El | El |
| | | Parts by Mass | - | - | - | - | 10 | 10 | 10 | 10 | 10 | 10 |
| Kneading | Cylinder Temperature | °C | 200 | 200 | 200 | 220 | 220 | 200 | 200 | 200 | 200 | 200 |
| Molding | Cylinder Temperature | °C | 200 | 200 | 200 | 220 | 220 | 200 | 200 | 200 | 200 | 200 |
| | Mold Temperature | °C | 40 | 40 | 40 | 60 | 60 | 40 | 40 | 40 | 40 | 40 |
| Mechanical Strength | Maximum Tensile Stress | MPa | 20 | 28 | 27 | 51 | 50 | 21 | 27 | 24 | 21 | 28 |
| | Tensile Elongation at Break | % | 36 | 19 | 18 | 13 | 15 | 35 | 23 | 26 | 24 | 21 |
| | Tensile Elastic Modulus | MPa | 1320 | 1412 | 1276 | 1874 | 1745 | 1235 | 1139 | 1254 | 1274 | 1134 |
| | Charpy Impact Strength | KJ/m² | 21.1 | 10.1 | 8.4 | 2.6 | 12.3 | 13.1 | 9.1 | 8.4 | 7.9 | 9.4 |
| | break or not break | | break | break | break | break | break | break | break | break | break | break |
| | Weld Charpy Impact Strength | KJ/m² | 8.4 | 4.1 | 3.6 | 1.1 | 4.4 | 4.3 | 3.1 | 2.4 | 3.5 | 4.6 |
| Transparency (Total Light Transmittance) | | % | 88 | 21 | 25 | 90 | 88 | 45 | 41 | 39 | 47 | 37 |
| Haze Value | | % | 4.6 | 78.3 | 77.4 | 2.3 | 5.5 | 56.4 | 58.2 | 63.7 | 51.3 | 48.7 |

The abbreviations shown in Table 6 are as follows:
PEG: Polyethylene glycol
DPER: Dipentaerythritol
BPEF: Bisphenoxyethanolfluorene
D17: Ethylenebisstearylamide
PKA-5003: Polyethylene glycol allyl ether (NOF Corp.)

From the results shown above, it can be seen that the resin molded articles of the examples are excellent in the impact resistance while maintaining the transparency in comparison with the resin molded articles of the comparative examples.

In particular, it can be seen that since the resin molded articles of the examples are often not completely destructed after the Charpy impact test, they have high toughness, are hardly reached to a complete destruction even when an impact is applied, and are hardly form a sharp corner in the destructed portion.

Further, it can be seen that in the resin molded articles of the examples, other mechanical strength (tensile stress, tensile elongation at break and tensile elastic modulus) are also high.

This application is based on a Japanese patent application filed on September 26, 2017 (Japanese Patent Application No. 2017-184700), and the whole contents thereof are incorporated herein by reference.

## Claims

1. A resin composition comprising:
a cellulose ester compound (A),
a poly(meth)acrylate compound (B),
a polyester resin (C), and
an ester compound (D) having a molecular weight of 250 or more and 2,000 or less.

2. The resin composition as claimed in Claim 1, wherein the cellulose ester compound (A) is at least one selected from a cellulose acetate propionate (CAP) and a cellulose acetate butyrate (CAB).

3. The resin composition as claimed in Claim 2, wherein the cellulose ester compound (A) is the cellulose acetate propionate (CAP).

4. The resin composition as claimed in Claim 1, wherein the poly(meth)acrylate compound (B) is a compound containing 50% by mass or more of a constituting unit derived from a (meth)acrylic acid alkyl ester.

5. The resin composition as claimed in Claim 4, wherein the poly(meth)acrylate compound (B) is a poly(meth)acrylic acid alkyl ester in which a number of carbon atoms in the alkyl chain is 1 or more and 8 or less.

6. The resin composition as claimed in Claim 5, wherein the poly(meth)acrylate compound (B) is a polymethyl methacrylate.

7. The resin composition as claimed in Claim 1, wherein the polyester resin (C) is a polyhydroxyalkanoate.

8. The resin composition as claimed in Claim 7, wherein the polyester resin (C) is a polylactic acid.

9. The resin composition as claimed in Claim 1, wherein the ester compound (D) is a fatty acid ester compound.

10. The resin composition as claimed in Claim 9, wherein the ester compound (D) is an adipic acid ester-containing compound.

11. The resin composition as claimed in Claim 1, which comprises a thermoplastic elastomer compound (E).

12. The resin composition as claimed in Claim 11, wherein the thermoplastic elastomer compound (E) is a (meth)acrylic thermoplastic elastomer.

13. The resin composition as claimed in Claim 1, wherein a content of the ester compound (D) with respect to the cellulose ester compound (A) is 1% by mass or more and 70% by mass or less.

14. The resin composition as claimed in Claim 13, wherein a content of the cellulose ester compound (A) with respect to the resin composition is 50% by mass or more.

15. A resin molded article comprising the resin composition as claimed in Claim 1.

16. The resin molded article as claimed in Claim 15, wherein a haze value of the resin molded article in case of having a thickness of 2 mm is 10% or less.

17. The resin molded article as claimed in Claim 15, which is an injection molded article.
